# EUROPEAN PATENT APPLICATION

(11) **EP 3 476 469 A1**
(43) Date of publication of application: **01.05.2019**
(21) Application number: 18191284.1
(22) Date of filing: 28.08.2018
(51) Int. Cl.: B01J 3/06, F04B 9/04

(54) **FLOW EQUIPMENT FOR HIGH-PRESSURE PROCESSING IN CONTINUOUS MODE**

(30) Priority: 29.08.2017 PL 42268617
(71) Applicant: Instytut Chemii Organicznej Polskiej Akademii Nauk, 01-224 Warszawa (PL); Instytut Wysokich Cisnien Polskiej Akademii Nauk, 01-142 Warszawa (PL)
(72) Inventor: Arabas, Jacek, 02-582 Warsaw (PL); Jurczak, Janusz, 02-384 Warsaw (PL); Machnik, Kuba, 01-909 Warsaw (PL); St pniak, Pawe Marek, 02-677 Warsaw (PL)
(74) Representative: LDS Lazewski Depo & Partners

(57) **Abstract**

The invention relates to flow equipment for high-pressure processing in continuous mode of processed substances characterized in that it comprises fluid-tight connected in sequence at least one high-pressure feeding pump (2), at least one high-pressure tubular processor (7, 7'), at least one high-pressure discharging pump (9), a high-pressure transducer (4, 11) between the high-pressure feeding pump (2) and the high-pressure discharging pump (9), wherein high-pressure coupling parts (3, 5, 10, 13, 13',16) are made by high-pressure fittings, tubes, valves and other type of high-pressure connectors and a programmable control unit (1) which controls the equipment wherein the equipment allows performing continuous-flow physical and chemical processes in pressure range 200-9000 bar and temperature range 0-130°C .

## Description

The invention relates to a flow equipment for high-pressure processing in continuous mode. Equipment allows performing continuous flow physical and chemical processes (including chemical reactions) in pressure range from 200 to 9000 bar and temperature range from 0°C to 130°C.
Performing continuous flow physical and chemical processes (including chemical reactions), based on the interaction (in particular chemical reaction) of at least two substances including solutions is extremely important in the point of view of industrial applications due to better process control, good mixing conditions, increasing of productivity and elimination of side or undesirable processes (including chemical reactions). That is why it is important to introduce processing lines ensuring stable, fully controlled process parameters in particular pressure and temperature.
Continuous flow processors known in the art are available for different pressure ranges. Chemical reactors enabling chemical transformations in supercritical water conditions operate at pressures about 200 bar (FR-2 814 967 and US20090127209A1). The most efficient systems for production of polyethylene achieve pressures up to 3400 bar (US20170022303). Higher pressures are obtained only in batch processors which allows to reach pressures up to 20000 bar but they are not flow-through equipment (for example high-pressure food processors or chemical synthesis reactors produced by the Institute of High Pressure Physics of the Polish Academy of Sciences).
There are some technical solutions which allow mixing and reaction of two substances under high pressure. US20160264911A1 discloses solution in which suitable alcohol and acid are compressed separately up to pressure of 250 bar, then mixed and injected into a tubular reactor. Product is discharged from the system by a pressure regulating valve. The bioreactor for growth of microorganisms cultures under pressure of 1500 bar (US20170015972A1) works in a similar way. In this method decompression is performed by the valve system used for both sampling and discharging the reactor. Analogous apparatus enabling performing reactions under high pressure (max. 1000 bar) and at elevated temperature (max. 400°C) described in US20040199030A1 has a pressure control system based on change of high-pressure compressor flow rate and setup of pressure regulating valve at reactor outlet.
US6221332B1 discloses a device for mixing and reacting at least two substances based on the injection into the mixing chamber. Substances are compressed by pneumatic pumps to pressure of 3000 bar and injected into the mixing chamber where pressure drops to 300 bar. This method is limited for flow rate of at least 500 ml/min and does not allow performing long time processes. Devices that allow to perform high pressure processes in a periodic or continuous flow manner also have limitations resulting from the construction of supply devices and decompression systems. Systems according to CA2678033A1, US20150203606, CN204848716 and US20170022303 allow performing processes at a maximum pressure of 3400 bar. In these methods pressure is generated by pneumatic piston compressors and discharging takes place with use of a valve.
The utility of mentioned solutions is demonstrated by examples of processes described in the prior art (WO2017004320A1, PL194706B1, Douglas C. Elliott, Gary G. Neuenschwander, Todd R. Hart, R. Scott Butner, Alan H. Zacher, Mark H. Engelhard , James S. Young, and David E. McCready Ind. Eng. 2004, 43, 1999-2004, Tahseen Razzaq, Tom N. Glasnov, and C. Oliver Kappe, Eur. J. Org. Chem. 2009, 1321-1325) and a wide range of flow devices of such manufacturers as the Parr Instrument Company, Amar Equipments PVT. or La Mesta Chimie Fine S.A.S.
However, in the state of the art there is no apparatus or equipment that would allow performing physical and chemical processes (including chemical reactions) under pressure in range from 200 to 9000 bar in continuous flow mode providing full control of pressure, temperature and duration of processes and allowing sampling and monitoring the process under high pressure. Compared to the classical solutions for high pressure processes, the continuous flow equipment according to the invention provides the possibility of precise control of the pressure and duration of the process including the flow rate and holding time of the substance in the apparatus. This allows to shorten the process duration, increase efficiency and purity of obtained products.
The invention relates to equipment for performing processes under a pressure of range from 200 to 9000 bar and optionally with temperature control in the range of 0 to 130 ° C, allowing to maintain the desired pressure for a specified time in continuous flow condition, achieving high efficiency of the processes, and allowing introducing any number of liquid substances at various stages of process. The object of the invention is achieved by equipment allowing to control pressure and flow by using of reciprocating pumps for both charging and discharging the processed substance. Among other things, the synchronized operation of both types of pumps is a non-obvious solution to the problem of simultaneous pressure and flow control, different from the compressor - throttle valve systems used in the state of the art. The use of the technical elements disclosed herein and their suitable combination makes it possible to achieve an object of the invention.

The continuous flow high-pressure equipment according to the invention comprises a programmable control unit 1, a high-pressure feeding pump 2 which generates pressure in a high-pressure tubular processor 7 and forces the flow of processed substances, high-pressure coupling parts 3, 5, 10, 13, 13', 16, high-pressure transducer 4, high-pressure injection pump 6 allowing the introduction/injection of additional substances into the high-pressure tubular processor 7 being under desired pressure, the high-pressure tubular processor 7, optionally equipped with a heating or cooling or heating-cooling device 8 and a high-pressure discharging pump 9 whose task is to keep a constant pressure in the high-pressure tubular processor 7 and perform decompression and discharge of processed substances. The high-pressure discharging pump 9 is operating in reverse to the high-pressure feeding pump 2. Optionally, the flow apparatus according to the invention may be equipped with a temperature transducer 12. Optionally, the flow apparatus according to the invention may be equipped with a high-pressure sampling pump 14 that allows the sampling of the processed substance from a high-pressure tubular processor 7. Optionally, the flow apparatus according to the invention may be equipped with a high-pressure valve unit 15 controlling the flow direction and high pressure analytical module/unit 17 enabling performing analysis of the processed substances during processing in particular in use of optical methods.
The minimum configuration of the equipment according to the invention includes the programmable control unit 1, the high-pressure feeding pump 2, the high-pressure tubular processor 7 and the high-pressure discharging pump 9. An important change from the existing solutions is the use of high-pressure discharging pumps instead of throttling valves. It allows to control the pressure value in the high-pressure tubular processor and the process efficiency in a wider range than in the case of using valves. Therefore decompression is performed in a controlled manner.

The objective of the invention is the flow equipment for high-pressure processing in continuous mode of processed substances characterized in that it comprises fluid-tight connected in sequence at least one high-pressure feeding pump 2, at least one high-pressure tubular processor 7, 7', at least one high-pressure discharging pump 9, a high-pressure transducer 4, 11 between the high-pressure feeding pump 2 and the high-pressure discharging pump 9, wherein high-pressure coupling parts 3, 5, 10, 13, 13', 16 are made by high-pressure fittings, tubes, valves and other type of high-pressure connectors and a programmable control unit 1 which controls the equipment wherein the equipment allows performing continuous-flow physical and chemical processes in pressure range 200-9000 bar and temperature range 0-130°C .

Preferably, the flow equipment according to the present invention characterized in that the high-pressure feeding pump 2 is a piston pump based on at least two piston actuators hydraulic-driven or electrical-driven or air- driven containing valve system with suction valve and discharge valve wherein valves are self-driven or have external drive system wherein the piston actuators provide continuous flow by running in a alternating sequence mode, while one charges the high-pressure tubular processor 7, 7', the other one fills with the processed substances and actuator displacement is controlled by the programmable control unit 1 which uses the high-pressure transducer and piston displacement signals.

Preferably, the flow equipment according to the present invention characterized in that the high-pressure discharging pump 9 is a piston pump based on at least two piston actuators hydraulic-driven or electrical-driven or air-driven containing valve system with suction valve and discharge valve wherein valves have external drive system wherein the piston actuators provide continuous discharge by running in a alternating sequence mode, and actuator displacement is controlled by the programmable control unit 1 which uses the high-pressure transducer and piston displacement signals.

Preferably, the flow equipment according to the present invention characterized in that the high-pressure tubular processor 7, 7' is built from high-pressure thick-walled tubes with t/D ratio >0.2 and DI range 0.1-100 mm and tubes are connected to form total length of the processor between 0.5 m and 2 km

Preferably, the flow equipment according to the present invention characterized in that the high-pressure tubular processor 7, 7' is equipped with heating or cooling or heating/cooling device 8, 8', which regulate temperature in range of 0-130°C.

Preferably, the flow equipment according to the present invention characterized in that it comprises at least one temperature transducer 12 between the high-pressure feeding pump 2 and the high-pressure discharging pump 9.

Preferably, the flow equipment according to the present invention characterized in that it comprises at least one high-pressure sampling pump 14 located before the high-pressure discharging pump 9, wherein the high-pressure sampling pump 14 is a piston pump based on a piston actuator hydraulic-driven or electrical-driven or air-driven with valve system with suction valve and discharge valve wherein valves have external drive system and actuator displacement is controlled by the programmable control unit 1.

Preferably, the flow equipment according to the present invention characterized in that it comprises at least one high-pressure analytical unit 17 which have high-pressure feed-through allowing analysis of the processed substances flowing through the high-pressure tubular processor 7, 7', especially optical feed-through for spectral analysis, wherein the high pressure analytical units 17 are connected to the high-pressure tubular processor 7, 7' with use of high-pressure coupling parts 3, 5, 10, 13, 13', 16 like high-pressure tubes, high-pressure fittings, high-pressure valves and other high-pressure connectors.

Preferably, the flow equipment according to the present invention characterized in that it comprises at least one high-pressure valve unit 15 controlling the flow direction, located between high-pressure tubular processors 7, 7', wherein the high-pressure valve unit 15 comprises three high-pressure valves which are hydraulic-driven or electrical-driven or air-driven and are controlled by the programmable control unit 1.

Preferably, the flow equipment according to the present invention characterized in that the high-pressure valve unit 15 according to analysis results from the high-pressure analytical unit 17 or from analysis made on samples collected by the high-pressure sampling pump 14 changes the flow direction between the high-pressure discharging pump 9 and the second high-pressure tubular processor 7'.

Preferably, the flow equipment according to the present invention characterized in that it comprises at least one high-pressure injection pump 6 located after the high-pressure feeding pump 2, wherein high-pressure injection pump 6 is a piston pump based on at least two piston actuators hydraulic-driven or electrical-driven or air- driven containing valve system with suction valve and discharge valve wherein valves are self-driven or have external drive system wherein the piston actuators provide continuous flow by running in an alternating sequence mode, while one charges the high-pressure tubular processor 7, 7', the other one fills with the processed substances and actuator displacement is controlled by the programmable control unit 1 which uses the high-pressure transducer 4, 11 and piston displacement signals.

Preferably, the flow equipment according to the present invention characterized in that it further comprises at least one high-pressure tubular processor 7, 7' which ensure modularity of the equipment.

Preferably, the flow equipment according to the present invention characterized in that it comprises any number of modules containing high-pressure injection pumps 6, high-pressure tubular processors 7, 7', high-pressure sampling pumps 14, between which there are high-pressure valve units 15 controlling flow direction and high-pressure analytical unit 17.

Preferably, the flow equipment according to the present invention characterized in that it comprises high-pressure feeding pumps 2, high-pressure injection pumps 6, high-pressure discharging pumps 9 and high-pressure sampling pumps 14 have thick piston or plunger moving inside cylinder with diameter between 1 mm and 100 mm, wherein for industrial application plungers are preferable, wherein cylinders of high-pressure feeding pumps 2, high-pressure injection pumps 6, high-pressure discharging pumps 9 and high-pressure sampling pumps 14 preferably are electrically driven, more preferable by servomotor or stepper motor.

Preferably, the flow equipment according to the present invention characterized in that the high-pressure feeding pumps 2, high-pressure injection pumps 6, high-pressure discharging pumps 9, high-pressure sampling pumps 14 and high-pressure analytical unit 17 are connected with high-pressure tubular processor 7, 7' by high-pressure tubes and high-pressure coupling parts wherein any high-pressure injection pump 6 and any each high-pressure sampling pump 14 may be located between the high-pressure feeding pumps 2 and the high-pressure tubular processor 7, 7' or between the high-pressure tubular processor 7, 7' and the high-pressure discharging pumps 9, or in any connection between high-pressure tubes of the high-pressure tubular processor 7, 7'.

Preferably, the flow equipment according to the present invention characterized in that carrying fluids which do not solidify at process condition, particularly for pressure range 200-5000 bar, is used for any processes performed in pressure and temperature range in which equipment works, preferably carrying fluids are selected from group of chloroform, acetonitrile, N,N-dimethylformamide, acetone, toluene, ethyl acetate, hexane, dichloromethane, tetrahydrofuran, methanol, ethanol, ethylene glycol, propylene glycol, n-propanol, i-propanol, diethyl ether, water, sebacic acid and mixtures thereof.

Preferably, the flow equipment according to the present invention is characterized in that it comprises the programmable control unit 1, the high-pressure feeding pump 2, high-pressure coupling parts 3, 10, 13, high-pressure transducers 4, 11, the high-pressure tubular processor 7, the high-pressure discharging pump 9, the high-pressure temperature transducer 12.

The flow equipment according to the present invention is presented on drawings described as followed:
Fig.1 shows schematic view of embodiment of the flow equipment according to the invention
Fig.2 shows schematic view of other embodiment of the flow equipment according to the invention
Fig.3 shows schematic view of another embodiment of the flow equipment according to the invention
Fig.4 shows general scheme of design of the flow equipment according to the invention

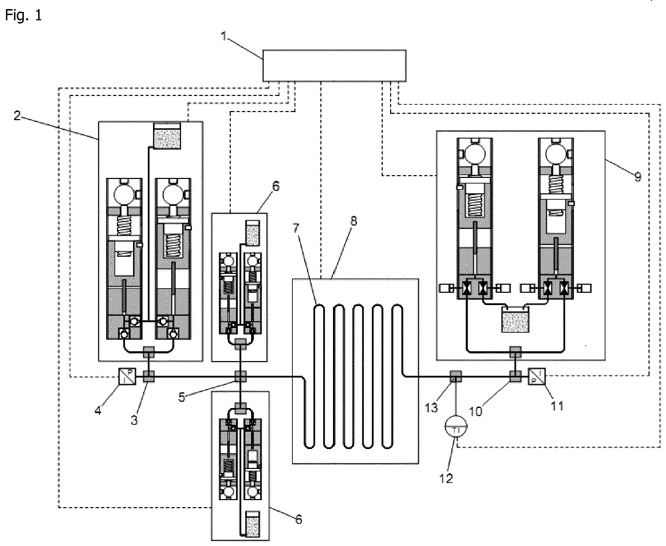

In one embodiment, the flow equipment according to the invention with references to specific structural elements is schematically depicted in Fig. 1, where
1 corresponds to programmable control unit
2 corresponds to high-pressure feeding pump
3 corresponds to high-pressure coupling part
4 corresponds to high-pressure transducer
5 corresponds to high-pressure coupling part
6 corresponds to high-pressure injection pump
7 corresponds to high-pressure tubular processor
8 corresponds to heating or cooling or heating-cooling device
9 corresponds to high-pressure discharging pump
10 corresponds to high-pressure coupling part
11 corresponds to high-pressure transducer
12 corresponds to high-pressure temperature transducer
13 corresponds to high-pressure coupling part

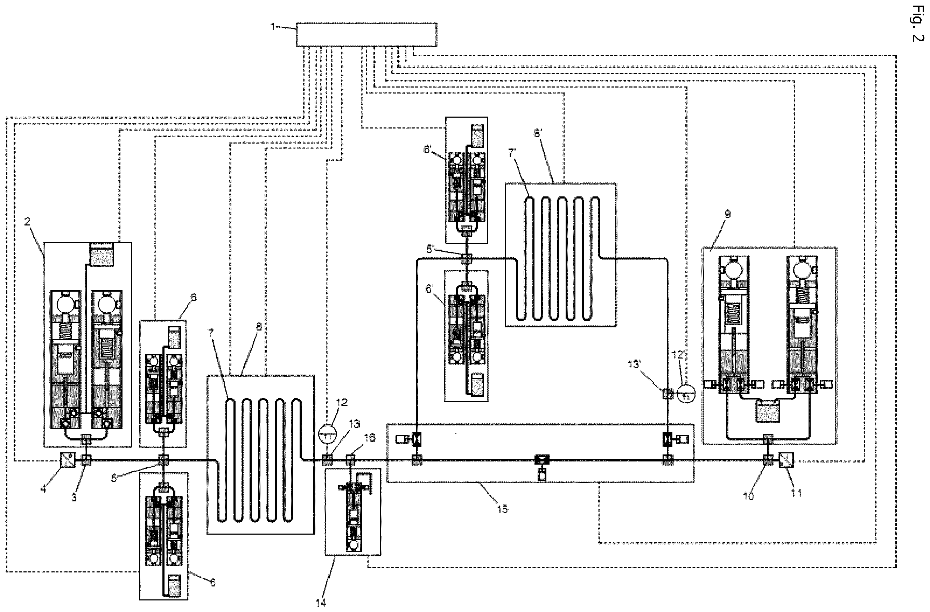

In other embodiment, the flow equipment according to the invention with references to specific structural elements is schematically depicted in Fig. 2, where
1 corresponds to programmable control unit
2 corresponds to high-pressure feeding pump
3 corresponds to high-pressure coupling part
4 corresponds to high-pressure transducer
5 corresponds to high-pressure coupling part
6 corresponds to high-pressure injection pump
7 and 7' correspond to high-pressure tubular processors
8 and 8' correspond to heating or cooling or heating/cooling devices
9 corresponds to high-pressure discharging pump
10 corresponds to high-pressure coupling part
11 corresponds to high pressure transducer
12 and 12' correspond to high-pressure temperature transducers
13 and 13' correspond to high-pressure coupling parts
14 corresponds high-pressure sampling pump
15 corresponds to high-pressure valve unit
16 corresponds to high-pressure coupling part
17 corresponds to high pressure analytical module/unit

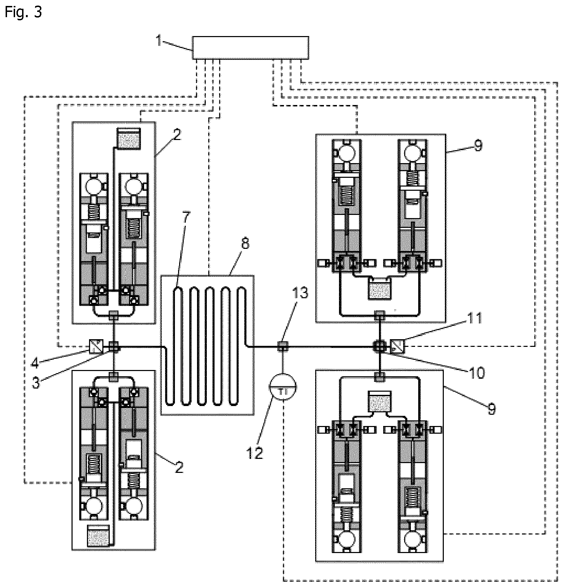

In another embodiment, the flow equipment according to the invention with references to specific structural elements is schematically depicted in Fig. 3, where
1 corresponds to programmable control unit
2 corresponds to high-pressure feeding pump
3 corresponds to high-pressure coupling part
4 corresponds to high-pressure transducer
7 corresponds to high-pressure tubular processor
8 corresponds to heating or cooling or heating/cooling device
9 corresponds to high-pressure discharging pump
10 corresponds to high-pressure coupling part
11 corresponds to high-pressure transducer
12 corresponds to high-pressure temperature transducer
13 corresponds to high-pressure coupling part

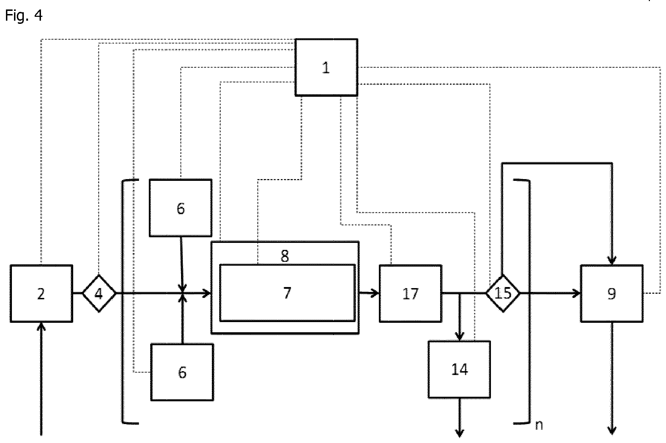

General scheme of design of the flow equipment according to the invention with references to specific structural elements is schematically depicted in Fig. 4, where
1 corresponds to programmable control unit
2 corresponds to high-pressure feeding pump
4 corresponds to high-pressure transducer
6 corresponds to high-pressure injection pump
7 corresponds to high-pressure tubular processor
8 corresponds to heating or cooling or heating/cooling device
14 corresponds high-pressure sampling pump
15 corresponds to high-pressure valve unit
17 corresponds to high pressure analytical module/unit

Figures show only details necessary to understand the invention. Structures and details which are not necessary to understand the invention but are obvious to the skilled person have been omitted from the figures to emphasize only specific features of the invention.

The structural elements of the flow equipment according to the invention are indicated below.

The programmable control unit 1 can be a PLC with its analog-digital modules. The programmable control unit 1 controls the process according to set parameters with use of input signals of pressure, temperature, displacement and output signals for pumps drive systems, valves and heating or cooling or heating/cooling devise 8, 8'.

The high-pressure feeding pump 2 is a piston pump based on at least two piston actuators hydraulic-driven or electrical-driven or air- driven containing valve system with suction valve and discharge valve wherein valves are self-driven or have external drive system. The piston actuators provide continuous flow by running in a alternating sequence mode, while one charges the high-pressure tubular processor 7, 7', the other one fills with the processed substances and actuator displacement is controlled by the programmable control unit 1 which uses the high-pressure transducer and piston displacement signals.

The high-pressure injection pump 6 is a piston pump based on at least two piston actuators hydraulic-driven or electrical-driven or air- driven containing valve system with suction valve and discharge valve wherein valves are self-driven or have external drive system. The piston actuators provide continuous flow by running in a alternating sequence mode, while one charges the high-pressure tubular processor 7, 7', the other one fills with the processed substances and actuator displacement is controlled by the programmable control unit 1 which uses the high-pressure transducer and piston displacement signals.
The high-pressure tubular processor 7, 7' is built from high-pressure thick-walled tubes with t/D ratio >0.2 and DI range 0.1-100 mm wherein for laboratory-scale processes DI range 0.1-10mm is the most preferable and DI range 10-100 mm is the most preferable for industrial scale. Tubes of the high-pressure tubular processor are connected to receive total length of the processor between 0.5 m and 2 km. Tubes can be straight or curved. Tubes can be additionally strengthen by introducing initial stresses by autofrettage or adding strengthening layer.
The high-pressure tubular processor 7, 7' may be equipped with heating or cooling or heating-cooling device 8, 8', wherein for the processes performed in laboratory scale the heating or cooling or heating-cooling device build from heat exchanger charged by circulating bath controlling the temperature in range of 0-130°C is the most preferable and for the industry scale the heating or cooling or heating-cooling device which is suitable for performed process and processor size. The flow equipment according to the present invention may be equipped in more than one high-pressure tubular processor 7, 7', for instance may comprise two high-pressure tubular processors 7, 7' forming sequent modules of the flow equipment.

The high-pressure discharging pump 9 is a piston pump based on at least two piston actuators hydraulic-driven or electrical-driven or air- driven containing valve system with suction valve and discharge valve wherein valves have external drive system. The piston actuators provide continuous discharge by running in a alternating sequence mode, and actuator displacement is controlled by the programmable control unit 1 which uses the high-pressure transducer and piston displacement signals.

The high-pressure sampling pump 14 is a piston pump based on a piston actuator hydraulic-driven or electrical-driven or air-driven and containing valve system with suction valve and discharge valve wherein valves have external drive system. The actuator displacement is controlled by the programmable control unit 1.

An electric motors are preferable as a drive system for high-pressure feeding pumps 2, high-pressure injection pumps 6, high-pressure discharging pumps 9 and high-pressure sampling pumps 14 for laboratory scale processes, the most preferably servomotor or stepper motor is used.

The high-pressure feeding pump 2, the high-pressure injection pump 6, the high-pressure discharging pump 9 and the high-pressure sampling pump 14 have thick piston or plunger (s / d <10 for the maximum pressure range 9000 bar, where s - stroke, d - diameter) moving inside cylinder with diameter between 1 mm and 100 mm wherein for industrial application plungers are more preferable.

The high-pressure analytical unit 17 is connected to the high-pressure tubular processor 7, 7' and has high-pressure feed-through allowing analysis of the processed substances flowing through the high-pressure tubular processor 7, 7', especially optical feed-through for spectral analysis.

The high-pressure feeding pump 2, the high-pressure injection pump 6, the high-pressure discharging pump 9, the high-pressure sampling pump 14 and the high-pressure analytical unit 17 are connected with high-pressure tubular processor 7 by high-pressure tubes and high-pressure coupling parts 3, 5, 10, 13, 13', 16, e.g. connectors, valves and other elements of high-pressure process fittings, wherein any high-pressure injection pump 6 and any high-pressure sampling pump 14 may be located between the high-pressure feeding/charging pumps 2 and the high-pressure tubular processor 7 or between the high-pressure tubular processor 7 and the high-pressure discharging pumps 9, or in any connection between high-pressure tubes of the high-pressure tubular processor.

The high-pressure feeding pump 2, the high-pressure injection pump 6, the high-pressure discharging pump 9, the high-pressure sampling pump 14 are controlled by the programmable control unit 1 which coordinates operation of all high-pressure pumps to ensure selected flow rate and pressure level. In particular the programmable control unit 1 is based on PLC.

High-pressure transducers 4, 11 may be located between the high-pressure feeding pump 2 and the high-pressure discharging pump 9. Optionally, high-pressure temperature transducers 12, 12' may be located between the high-pressure feeding pump 2 and the high-pressure discharging pump 9.

High-pressure transducers 4, 11 and high-pressure temperature transducers 12, 12' measure critical parameters of the process which are pressure and temperature, respectively.

The high-pressure valve unit 15 which controls the flow direction and may be located between high-pressure tubular processors 7, 7' and comprises three high-pressure valves which are hydraulic-driven or electrical-driven or air-driven and are controlled by the programmable control unit 1. The high-pressure valve unit 15 according to analysis results made on samples collected by the high-pressure sampling pump 14 changes the flow direction between the high-pressure discharging pump 9 and the second high-pressure tubular processor 7'.

In one embodiment, the flow equipment according to the invention may comprise many modules containing additional high-pressure injection pumps 6 and additional high-pressure tubular processors 7, 7'. Those modules are connected in sequence.

In another embodiment, the flow equipment according to the invention comprises the programmable control unit 1, the high-pressure feeding pump 2, high-pressure coupling parts 3, 5, 10, high-pressure transducers 4, 11, the high-pressure injection pump 6, the high-pressure tubular processor 7, the heating-cooling device 8, the high-pressure discharging pump 9 and the high-pressure temperature transducer 12.

In another embodiment, the flow equipment according to the invention comprises the programmable control unit 1, the high-pressure feeding pump 2, high-pressure coupling parts 3, 5, 10, 13, 13', 16, high-pressure transducers 4, 11, high-pressure injection pumps 6, 6', high-pressure tubular processors 7, 7', heating/cooling devices 8, 8', the high-pressure discharging pump 9, the high-pressure temperature transducers 12, 12', the high-pressure sampling pump 14 and the high-pressure valve unit 15.

In another embodiment, the flow equipment according to the invention comprises the programmable control unit 1, the high-pressure feeding pump 2, high-pressure coupling parts 3, 10, 13, high-pressure transducers 4, 11, the high-pressure tubular processor 7, the heating-cooling device 8, the high-pressure discharging pump 9 and the high-pressure temperature transducer 12.

In another embodiment, the flow equipment according to the invention comprises the programmable control unit 1, the high-pressure feeding pump 2, high-pressure coupling parts 3, 10, 13, high-pressure transducers 4, 11, the high-pressure tubular processor 7, the high-pressure discharging pump 9 and the high-pressure temperature transducer 12.

In another embodiment, the flow equipment according to the invention comprises the programmable control unit 1, more than one high-pressure feeding pump 2, more than one high-pressure injection pump 6, more than one high-pressure tubular processor 7, more than one high-pressure discharging pump 9, more than one high-pressure sampling pump 14.

In another embodiment, the flow equipment according to the invention may comprise any number of modules containing high-pressure injection pumps, high-pressure tubular processors and high-pressure sampling pumps. And high-pressure valve units and high pressure analytical modules between them.

In another embodiment, the flow equipment according to the invention all high-pressure components may be located in safety box.

The term "processed substance(s)" stands for substance(s) which is/are being processed by the equipment according to the invention. Processed substance can be pure substance being also carrying fluid, a mixture of any substance dissolved in carrying fluid or a carrying fluid which is feeded by any substance in further parts (further modules) of the flow equipment.

The carrying fluid can be a single substance or mixture of two or more substances. For any processes performed in pressure and temperature range in which the flow equipment according to the invention operates, carrying fluids which do not solidify at process condition are used. Preferably, for pressure range 200-5000 bar carrying fluids are selected from group of chloroform, acetonitrile, N,N-dimethylformamide, acetone, toluene, ethyl acetate, hexane, dichloromethane, tetrahydrofuran, methanol, ethanol, ethylene glycol, propylene glycol, n-propanol, i-propanol, diethyl ether, water, sebacic acid and mixtures thereof.. Preferably, for pressure range 200-9000 bar carrying fluids are selected from group of toluene, ethyl acetate, hexane, dichloromethane, tetrahydrofuran, methanol, ethanol, ethylene glycol, propylene glycol, n-propanol, i-propanol, diethyl ether, water, sebacic acid and mixtures thereof.

Connections between any elements of the equipment ensure technical pressure tightness allowing performing processes in assumed pressure level.

Easiness of scaling of the flow equipment according to the invention allows to elaborate processes from laboratory up to industrial scale. By adjusting size of high-pressure pumps and diameter and length of the high-pressure processor one can obtain particular parameters of process for desirable scale.

The flow equipment according to the invention may be used for performing processes known in state of the art and for research on new chemical reactions in particular for reactions with negative activation volume, optimization of chemical reaction conditions in laboratory scale in particular for reactions with negative activation volume, performing pure processes due to elimination of side reactions, pascalization (HPP high-pressure processing) and postfunctionalization of food products, performing of pressure assisted thermal sterilization (PATS) of products in particular cosmetics, high-pressure functionalization or/and sterilization of cosmetics, food, and other bio-products.

Skilled person understands that modules, parts, and components listed in present description and illustrated in showed figures can assure unlimited embodiments of constructing of described invention. Features depicted or described in one embodiment of the equipment can be combined with features described in other embodiments of equipment in range where those features are compatible not alternative. Scope of described invention includes also combinations, modifications and variations of presented versions of equipment.

### Examples

Embodiments of the invention are discussed below to outline the principles of construction, function, manufacture and use of the devices and methods disclosed herein. The references used in the description correspond to the reference shown in the particular figures and examples.

### Example 1

This example concerns implementation of the flow equipment based on the embodiment of the invention shown in the Fig. 1. Example 1 applies to the laboratory flow reactor for conducting chemical reactions with negative activation volume.

The reactor is dedicated to conducting chemical reactions of two substances under the following conditions: pressure up to **8000 bars**, temperatures from **0 to 130°C**, nominal flow of **1ml/min** for reaction time of **30 minutes**.

The flow equipment according to the invention of Example 1 comprises high-pressure feeding pump 2, two high-pressure injection pumps 6, high-pressure tubular processor 7, high-pressure discharging pump 9, high-pressure transducers 4, 11, temperature transducer 12, high-pressure coupling parts 3, 5, 10, 13, programmable control unit 1 with programmable logic controller (PLC) and circulator 8. The high-pressure pumps 2, 6 are of similar design based on two double-acting plunger actuators, provided with suction and discharge valves. The actuators are electrically driven by a step motor. The actuators work alternately to ensure the continuity of pumping: when the first actuator pumps the liquid under high pressure, the second one is filled under low pressure. The plunger displacement is electronically controlled by the PLC using signals of pressure and plunger displacement. Such actuators are supplied e.g. by the Institute of High Pressure Physics PAS, under the trade name MP5.

The high-pressure feeding pump 2 comprises actuators with the plunger diameter of 6 mm and swept volume of 1.4 ml (stroke 50 mm). Driving by the step motor provides maximum pumping speed of 28 µl/s (for resolution of 100 steps per second).

The high-pressure injection pump 6 comprises actuators with the plunger diameter of 4 mm and swept volume of 0.5 ml (stroke 40 mm). Driving by the step motor provides maximum pumping speed of 12.5 µl/s (for resolution of 100 steps per second).

The high-pressure discharging pump 9 comprises actuators with the parameters as those of the high-pressure feeding pump, but as opposed to that, the actuators are provided with the suction and discharge valves, driven electrically, hydraulically or pneumatically, and controlled by the PLC.

The high-pressure tubular processor 7 is made of standard high-pressure tubes with the outer diameter 3/8" (9.52 mm) and the inner diameter 1/16" (1.6 mm) manufactured e.g. by the company SANDVIK, Sweden. These tubes are rated to static working pressure of 10140 bars at ambient temperatures so higher than assumed maximum available service pressure PS = 8000 bars. However temperature of 130°C decreases their strength by about 20%. The tube of the processor may be divided into 10 straight sections, each of them 1.5 meter long and 9 sections in U-shape (minimum bending radius is 50 mm). The length of this processor reaches 15 meters. The lengths of standard tubes are between 4 and 7 meters, other lengths up to 16 meters are also available. The tube sections are tightly connected. The whole tube of the processor is placed in a tubular bath. Temperature control is performed by changing temperature of the bath in which the tube of the processor is immersed. The required circulator 8 is available e.g. from the company HUBER, Germany.

The high-pressure pumps 2, 6, 9, high-pressure tubular reactor 7, high-pressure transducers 4, 11 and temperature transducer 12 are connected to each other under the scheme in Fig.1, using the standard high-pressure couplings 3, 5, 10 e.g. from the company SITEC, Switzerland, and the high-pressure tubes identical to those from which high-pressure tubular reactor is built.

The high-pressure transducers 4, 11 e.g. type HP-2 from the company WIKA, Germany, should monitor the critical process parameters, therefore are placed at the output port of the feeding pump 2 and the input port of the discharging pump 9.

The temperature transducers 12 e.g. high-pressure thermocouples offered by the Institute of High Pressure Physics PAS, monitor the critical process parameters, preferably temperature of the processed substance in the tubular processor.

The PLC together with its analog-digital modules e.g. from the company MITSUBISHI, Japan within the power and control unit 1 control the process following the set process parameters, basing on the input signals of pressure, temperature and position of the pump plungers.

All high-pressure components are placed in a safety box.

### Example 2

This example concerns implementation of the flow equipment based on the embodiment of the invention shown in the Fig. 2. Example 2 applies to the laboratory flow reactor for conducting chemical reactions with negative activation volume, with possibility of process replication.

The reactor is dedicated to conducting chemical reactions of two substances under the following conditions: pressure up to **6000 bars**, temperatures from **0 to 130°C**, nominal flow of **1 ml/min** for reaction time of **30 minutes** or **60 minutes** in the case of the process replication. The flow equipment according to the invention of Example 2 comprises the same components as Example 1 (but may be rated to 7000 bars instead of 10000 bars) and additionally: high-pressure sampling pump 14 connected to the line by the coupler 16, high-pressure valve unit 15 which directs the flow, and further two high-pressure injection pumps 6', high-pressure tubular processor 7', high-pressure coupling parts 5', 13', temperature transducer 12' and circulator 8'.

The high-pressure sampling pump 14 is a double-acting plunger actuator, provided with a valve head and electrically driven by a step motor. The suction and discharge valves incorporated in the valve head may be driven electrically, hydraulically or pneumatically and controlled by the PLC.

The actuator, the valve head and the drive are similar in construction as those applied in the discharge pump 9. The actuator displacement and on/off valve position are electronically controlled by the PLC.

The high-pressure sampling pump 14 comprises actuator with the plunger diameter of 4 mm and swept volume of 0.5 ml (stroke 40 mm), so with the same parameters that the injection pump actuator.

The high-pressure valve unit 15 directing the flow comprises three needle valves driven electrically, hydraulically or pneumatically and controlled by the programmable control unit 1 with the PLC. Such valves are supplied e.g. by the Institute of High Pressure Physics PAS. The valve unit, depending on the results of analysis of the sample taken by the high-pressure sampling pump 14, directs the processed substance to the discharging pump 9 or to the further high-pressure tubular processor 7'. In the latter case, it may be possible to increase the reagent quantity by supplying it through the injection pump 6' connected to the line before the entrance to the processor, using the high-pressure coupler 5'.

The high-pressure tubular processors 7, 7' are made of standard high-pressure tubes with the outer diameter 1/4" (6.35 mm) and the inner diameter 1/16" (1.6 mm) manufactured e.g. by the company SANDVIK, Sweden. These tubes are rated to static working pressure of 7890 bars at ambient temperatures so higher than the assumed maximum available service pressure PS = 6000 bars. However temperature of 130°C decreases their strength by about 20%. The tube of the each processor may be divided into 10 straight sections, each of them 1.5 meter long and 9 sections in U-shape (minimum bending radius is 25 mm). The length of the processor reaches 15 meters. The lengths of standard tubes are between 4 and 7 meters, other lengths up to 16 meters are also available. The tube sections are tightly connected. The whole tube of the processor is placed in a tubular bath. Temperature control is performed by changing temperature of the bath in which the tube of the processor is immersed. The required circulators 8, 8' are available e.g. from the company HUBER, Germany.

The high-pressure pumps 2, 6, 6', 9, 14, high-pressure tubular reactors 7, 7', high-pressure transducers 4, 11 and temperature transducer 12, 12' are connected to each other under the scheme in Fig.2, using the standard (for this rating) high-pressure couplings 3, 5, 5', 10, 13, 13', 16 e.g. from the company SITEC, Switzerland, and the high-pressure tubes identical to those from which high-pressure tubular reactor is built.

All high-pressure components are placed in a safety box.

### Example 3

This example concerns implementation of the flow equipment based on the embodiment of the invention shown in the Fig. 3. Example 3 applies to the flow pascalizator for high-pressure functionalization, pasterization and sterilization of cosmetics, pharmaceutics, foods and other bio-products.

The processor is dedicated to pressurizing liquids under the following conditions: pressure up to **6000 bars**, temperatures elevated to **130°C**, nominal flow of **1 l/min** for reaction time of 6 **minutes**.

The flow equipment according to the invention of Example 3 comprises two high-pressure feeding pumps 2, high-pressure tubular processor 7, two high-pressure discharging pumps 9, high-pressure transducers 4, 11, temperature transducer 12, high-pressure coupling parts 3, 10, 13, programmable control unit 1 with PLC controller and electric heater 8.

The high-pressure feeding pumps 2 are of similar design based on two double-acting plunger actuators, provided with suction and discharge valves. The actuators are electrically driven by servomotor. The actuators work alternately in order to ensure the continuity of pumping: when the first actuator pumps the liquid under high pressure, the second one is filled under low pressure. The plunger displacement is electronically controlled by the PLC using signals of pressure and plunger displacement. The high-pressure feeding pumps 2 comprise actuators with the plunger diameter of 19 mm and swept volume of 51 ml (stroke about 180 mm).

The high-pressure discharging pumps 9 are of similar design based on two double-acting plunger actuators, provided with suction and discharge valves. The actuators are electrically driven by servomotor. The plunger displacement is electronically controlled by the PLC using signals of pressure and plunger displacement. The actuators are provided with the suction and discharge valves, driven electrically, hydraulically or pneumatically, and controlled by the PLC. The high-pressure discharging pumps 9 comprise actuators with the plunger diameter of 19 mm and swept volume of 51 ml (stroke about 180 mm).

Parameters of the above mentioned actuators (plunger diameter, stroke) are typical for those of the high-pressure water pumps of discharge capacity of about 3 l/min, applied in the water jet cutting industry, e.g. HPPS 6045 from the company UHDE, Germany.

Providing the equipment with double feeding and discharging pumps allows the higher flexibility of industrial-scale production, including maintenance during operations.

The high-pressure tubular processor 7 is made of standard high-pressure tubes with the outer diameter 30 mm and the inner diameter 10 mm manufactured e.g. by the company SANDVIK, Sweden. These tubes are rated to static working pressure of 6250 bars at ambient temperatures so higher than assumed maximum available service pressure PS = 6000 bars. The tubes may be additionally strengthened by autofrettage (or other method used in high-pressure technology) which increases working pressure above 8000 bars. However temperature of 130°C decreases their strength by about 20%.

The tube of the processor may be divided into 10 straight sections, each of them 7 meters long and 9 sections in U-shape (minimum bending radius is 200 mm). The length of this processor reaches 78 meters. The lengths of standard tubes are between 4 and 7 meters. The tube sections are tightly connected with the line comprising other components. Heating and temperature control are performed by the resistance heater wounded on the outer diameter of the tube and temperature controller.

The high-pressure pumps 2, 9, high-pressure tubular reactor 7, high-pressure transducers 4, 11 and temperature transducer 12 are connected to each other under the scheme in Fig.3, using the standard high-pressure couplings 3, 10, 13 e.g. from the company UHDE, Germany, and high-pressure tubes identical to those from which high-pressure tubular reactor is built.

The high-pressure transducers 4, 11 e.g. type HP-2 from the company WIKA, Germany, should monitor the critical process parameters, therefore are placed at the output port of the feeding pump 2 and at the entrance port of the discharging pump 9.

The temperature transducers 12 e.g. high-pressure thermocouples offered by the Institute of High Pressure Physics PAS, monitor the critical process parameters, preferably temperature of the liquid in the tubular processor 7.

The PLC together with its analog-digital modules e.g. from the company MITSUBISHI, Japan, located in the power and control unit 1 control the process following the set process parameters, basing on the signals of pressure, temperature and position of the pump plungers.

All high-pressure components are placed in a separate safety space.

## Claims

1. Flow equipment for high-pressure processing in continuous mode of processed substances **characterized in that** it comprises fluid-tight connected in sequence at least one high-pressure feeding pump (2), at least one high-pressure tubular processor (7, 7'), at least one high-pressure discharging pump (9), a high-pressure transducer (4, 11) between the high-pressure feeding pump (2) and the high-pressure discharging pump (9), wherein high-pressure coupling parts (3, 5, 10, 13, 13', 16) are made by high-pressure fittings, tubes, valves and other type of high-pressure connectors and a programmable control unit (1) which controls the equipment wherein the equipment allows performing continuous-flow physical and chemical processes in pressure range 200-9000 bar and temperature range 0-130°C .

2. Flow equipment according to claim 1 **characterized in that** the high-pressure feeding pump (2) is a piston pump based on at least two piston actuators hydraulic-driven or electrical-driven or air-driven containing valve system with suction valve and discharge valve wherein valves are self-driven or have external drive system wherein the piston actuators provide continuous flow by running in a alternating sequence mode, while one charges the high-pressure tubular processor (7, 7'), the other one fills with the processed substances and actuator displacement is controlled by the programmable control unit (1) which uses the high-pressure transducer and piston displacement signals,
and the high-pressure discharging pump (9) is a piston pump based on at least two piston actuators hydraulic-driven or electrical-driven or air-driven containing valve system with suction valve and discharge valve wherein valves have external drive system wherein the piston actuators provide continuous discharge by running in a alternating sequence mode, and actuator displacement is controlled by the programmable control unit (1) which uses the high-pressure transducer and piston displacement signals.

3. Flow equipment according to any of the previous claims **characterized in that** the high-pressure tubular processor (7, 7') is built from high-pressure thick-walled tubes with t/D ratio >0.2 and DI range 0.1-100 mm and tubes are connected to form total length of the processor between 0.5 m and 2 km.

4. Flow equipment according to any of the previous claims **characterized in that** the high-pressure tubular processor (7, 7') is equipped with heating or cooling or heating-cooling device (8, 8'), which regulate temperature in range of 0-130°C.

5. Flow equipment according to any of the previous claims **characterized in that** it comprises at least one temperature transducer (12) between the high-pressure feeding pump (2) and the high-pressure discharging pump (9).

6. Flow equipment according to any of the previous claims **characterized in that** it further comprises at least one high-pressure sampling pump (14) located before the high-pressure discharging pump (9) wherein the high-pressure sampling pump (14) is a piston pump based on a piston actuator hydraulic-driven or electrical-driven or air-driven, with valve system with suction valve and discharge valve, wherein valves have external drive system and actuator displacement is controlled by the programmable control unit (1).

7. Flow equipment according to any of the previous claims **characterized in that** it further comprises at least one high-pressure analytical unit (17) which has high-pressure feed-through allowing analysis of the processed substances flowing through the high-pressure tubular processor (7, 7'), especially optical feed-through for spectral analysis, wherein high pressure analytical unit(s) is/are connected to the high-pressure tubular processor (7, 7') with use of high-pressure coupling parts (3, 5, 10, 13, 13', 16) like high-pressure tubes, high-pressure fittings, high-pressure valves and other high-pressure connectors.

8. Flow equipment according to any of the previous claims **characterized in that** it further comprises at least one high-pressure valve unit (15) controlling the flow direction, located between high-pressure tubular processors (7, 7') wherein high-pressure valve unit comprises three high-pressure valves hydraulic-driven or electrical-driven or air-driven and controlled by the programmable control unit (1).

9. Flow equipment according to claim 8 **characterized in that** the high-pressure valve unit (15), according to analysis results from the high-pressure analytical unit (17) or from analysis made on samples collected by the high-pressure sampling pump (14), changes the flow direction of processed substance between the high-pressure discharging pump (9) and the second high-pressure tubular processor (7').

10. Flow equipment according to any of the previous claims **characterized in that** it further comprises at least one high-pressure injection pump (6) located after the high-pressure feeding pump (2), wherein the high-pressure injection pump (6) is a piston pump based on at least two piston hydraulic-driven or electrical-driven or air-driven with valve system with suction valve and discharge valve wherein valves are self-driven or have external drive system wherein the piston actuators provide continuous flow by running in a alternating sequence mode, while one charges the high-pressure tubular processor (7, 7'), the other one fills with the injected substances and actuator displacement is controlled by the programmable control unit (1) using signals from the high-pressure transducer (4,11) and piston displacement measurement.

11. Flow equipment according to any of the previous claims **characterized in that** it further comprises at least one high-pressure tubular processors (7, 7') which ensure modularity of the equipment.

12. Flow equipment according to any of the previous claims **characterized in that** it further comprises any number of modules containing high-pressure injection pumps (6), high-pressure tubular processors (7, 7'), high-pressure sampling pumps (14),
between which there are high-pressure valve units (15) controlling flow direction and high-pressure analytical unit (17).

13. Flow equipment according to any of the previous claims **characterized in that** the high-pressure feeding pumps (2), high-pressure injection pumps (6), high-pressure discharging pumps (9) and high-pressure sampling pumps (14) have thick piston or plunger moving inside cylinder with diameter between 1 mm and 100 mm wherein for industrial application plungers are preferable, wherein cylinders of high-pressure feeding pumps (2), high-pressure injection pumps (6), high-pressure discharging pumps (9) and high-pressure sampling pumps (14) preferably are electrically driven, more preferable by servomotor or stepper motor.

14. Flow equipment according to any of the previous claims **characterized in that** the high-pressure feeding pumps (2), high-pressure injection pumps (6), high-pressure discharging pumps (9), high-pressure sampling pumps (14) and high-pressure analytical units (17) are connected with high-pressure tubular processor (7, 7') by high-pressure tubes and high-pressure coupling parts wherein any high-pressure injection pump (6) and any each high-pressure sampling pump (14) may be located between the high-pressure feeding pumps (2) and the high-pressure tubular processor (7, 7') or between the high-pressure tubular processor (7, 7') and the high-pressure discharging pumps (9), or in any connection between high-pressure tubes of the high-pressure tubular processor (7, 7').

15. Flow equipment according to any of the previous claims **characterized in that** the carrying fluids which do not solidify at process condition, particularly for pressure range 200-5000 bar, are used for any processes performed in pressure and temperature range in which equipment works, preferably carrying fluids are selected from group of chloroform, acetonitrile, N,N-dimethylformamide, acetone, toluene, ethyl acetate, hexane, dichloromethane, tetrahydrofuran, methanol, ethanol, ethylene glycol, propylene glycol, n-propanol, i-propanol, diethyl ether, water, sebacic acid and mixtures thereof.

16. Flow equipment according to any of the previous claims **characterized in that** it comprises the programmable control unit (1), the high-pressure feeding pump (2), high-pressure coupling parts (3, 10, 13), high-pressure transducers (4, 11), the high-pressure tubular processor (7), the high-pressure discharging pump (9) and temperature transducer (12).
